# EUROPÄISCHE PATENTSCHRIFT

(11) **EP 0 353 432 B1**
(45) Veröffentlichungstag und Bekanntmachung des Hinweises auf die Patenterteilung: **07.04.1993**
(21) Anmeldenummer: 89110747.6
(22) Anmeldetag: 14.06.1989
(51) Int. Cl.: A01N 59/00

(54) **Verfahren zur Beschleunigung der Abreife landwirtschaftlicher Nutzpflanzen**
Process for accelerating the ripening of agricultural consumption plants
Procédé pour accélérer la maturation de plantes utiles dans l'agriculture

(30) Priorität: 02.08.1988 DE 3826242
(43) Veröffentlichungstag der Anmeldung: 07.02.1990
(73) Patentinhaber: Degussa Aktiengesellschaft, 60311 Frankfurt (DE)
(72) Erfinder: Ferch, Horst, Dr., D-6454 Bruchköbel (DE); Mathias, Johann, Dr., D-8756 Kahl (DE); Kahnt, Günter, Prof. Dr., D-7024 Filderstadt (DE); Küpfer, Christian, D-7302 Ostfildern 3 (DE)

(56) Entgegenhaltungen:
- BE-A- 855 480
- FR-A- 2 454 271
- CHEMICAL ABSTRACTS, Band 56, Nr. 8, 16. April 1962, Spalte 8954 e-f G. RYZHOVA: "Biochemical changes in leaves and seeds of lupine by treatment with defoliators"

## Beschreibung

Die Erfindung betrifft ein Verfahren zur Beschleunigung der Abreife landwirtschaftlicher Nutzpflanzen.

Abreife im pflanzenbaulichen Sinne ist der Vorgang, bei dem die Pflanze die Photosynthese einstellt und die verfügbaren Nährstoffe und Assimilate in die Ertragsorgane verlagert. Äußere Anzeichen für das Einstellen der Photosynthese sind Gelbwerden der Blätter und letztlich Blattabwurf.

Aus Gründen der Witterung ist wünschenswert, den Vorgang der Abreife zu beschleunigen, um den Zeitpunkt der Ernte vorverlegen zu können.

Gegenstand der Erfindung ist ein Verfahren zur Beschleunigung der Abreife landwirtschaftlicher Nutzpflanzen, welches dadurch gekennzeichnet ist, daß man die landwirtschaftlichen Nutzpflanzen mit einer wäßrigen Dispersion einer oder mehrerer hydrophiler, auf pyrogenem Wege hergestellter Kieselsäuren behandelt.

In einer besonderen Ausführungsform der Erfindung kann man auf pyrogenem Wege hergestellte Mischoxide der Kieselsäure mit anderen Elementen, wie zum Beispiel Aluminium, einsetzen.

Der Begriff Mischoxid ist bekannt. So werden Mischoxide in der US-PS 2,951,044 beschrieben.

Die eingesetzten Dispersionen sind bekannt und im Handel erhältlich.

Die Applikation kann in Mengen von 25 bis 100 kg/ha Kieselsäure- bzw. Mischoxiddispersion zu Ende der Assimilationseinlagerungsphase, d. h., ca. 3 Wochen vor der Normalernte, erfolgen. Dadurch ist eine Ernteverfrühung um 1 bis 2 Wochen möglich.

Das erfindungsgemäße Verfahren hat den Vorteil, daß die Abreife von Pflanzenteilen, die nicht einer Nutzung zugeführt werden, beschleunigt wird.

Die geernteten Produkte weisen darauf einen höheren Trockensubstanzgehalt auf. Der richtige Applikationszeitpunkt ist dabei zu berücksichtigen. Eine zu frühe Anwendung ergibt einen Minderertrag durch zu frühen Blattabwurf. Eine zu späte Applikation zeigt keine ausreichende Wirkung.

### Beispiele

Geprüft wurden die Aerosiltypen 200, OX50 und MOX 170 als Dispersion K 310, K 330 und K 315.

Zur Prüfung der Wirkung von Aerosilen auf das Wachstum verschiedener Kulturpflanzen wurden folgende Pflanzenarten mit verschiedenen Mengen/ha und z. T. in verschiedenen Wachstumsstadien besprüht:
1. Ackerbohnen
2. Weiße Lupinen

Die Wirkungen waren abhängig vom Aerosiltyp, der Applikationsmenge (30 oder 90 kg/ha), dem Wachstumsstadium der Pflanze, der Pflanzenart, dem Versuchsstandort (Hohenheim oder Schwäbische Alb) und ganz sicher auch vom Witterungsablauf nach der Spritzung der Mittel.

Ein Hauptresultat des ersten Versuchsjahres ist eine Sikkation (Entwässerung, Absterben) der Blätter bei Körnerleguminosen. Diese führte bei optimalen Anwendungsterminen zu einer gleichmäßigeren und evtl. früheren Abreife der Leguminosen mit höheren Trockensubstanzgehalten der Körner. Dies kann Trocknungskosten sparen, den Mähdrusch erleichtern (verbilligen) und die Saatgutqualität verbessern.

Im Einzelnen wurden die folgenden Frgebnisse erzielt:

### Weiße Lupinen

Kornerträge (KE), Korn-Trockensubstanzgehalt (TS) und Kornanteil an der Gesamttrockensubstanz (KA) von weißen Lupinen nach Blattapplikation von MOX 170 - Dispersion (10 %) 1986

| 1986, Sorte LUBLANC | | | |
|---|---|---|---|
| MOX 170 kg/ha | KE dt/ha | TS % | KA % |
| 0 | 46.6 | 78.5 | 38.5 |
| 30/2 | 44.4 | 77.9 | 35.2 |
| 90/2 | 42.6* | 87.4* | 39.7 |
| /2 = pH 2 | | | |
| Spritztermine: 1986: 25.8. (Blühende) Ernte am 6.10. | | | |

| | | | |
|---|---|---|---|
| * = signifikant bei P = 5 % | | | |

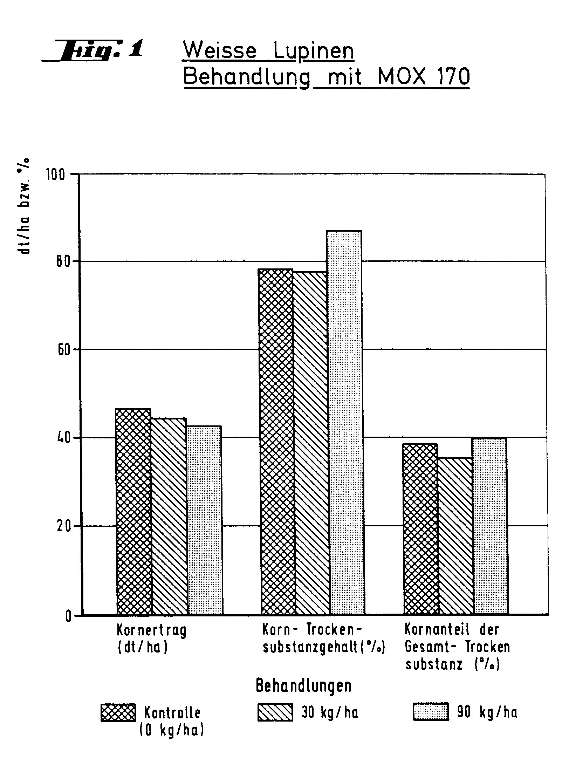

Diese Ergebnisse sind in der Figur 1 graphisch dargestellt.

### Ackerbohnen

Kornerträge (KE), Korn-Trockensubstanzgehalt (TS), Kornanteil (KA) und Hülsenzahl (Hü/m²) von Ackerbohnen nach Blattapplikation von Aerosil 200, OX 50 und MOX 170 in 10 %-Dispersionen. Ensmad 1986

| | KE dt/ha | TS % | KA % | Hü/m² Stück |
|---|---|---|---|---|
| Kontrolle | 35.9 | 67.5 | 41.1 | 407 |

| Aerosil 200 | | | | |
|---|---|---|---|---|
| 30 kg/ha | 28.8* | 83.2* | 45.0 | 304* |
| 90 kg/ha | 31.1+ | 79.4* | 46.2+ | 316* |

| OX 50 | | | | |
|---|---|---|---|---|
| 30 kg/ha | 35.2 | 78.8* | 50.0* | 377 |
| 90 kg/ha | 33.5 | 83.0* | 46.3+ | 411 |

| MOX 170 | | | | |
|---|---|---|---|---|
| 30 kg/ha | 32.8 | 78.4* | 55.0* | 416 |
| 90 kg/ha | 31.5 | 87.4* | 46.5 | 397 |

| | | | | |
|---|---|---|---|---|
| * = signifikant bei P = 5 % + = signifikant bei P = 10 % Spritztermine: 10.7. (Blüte) und 26.8. (Blühende); Ernte am 23.9. | | | | |

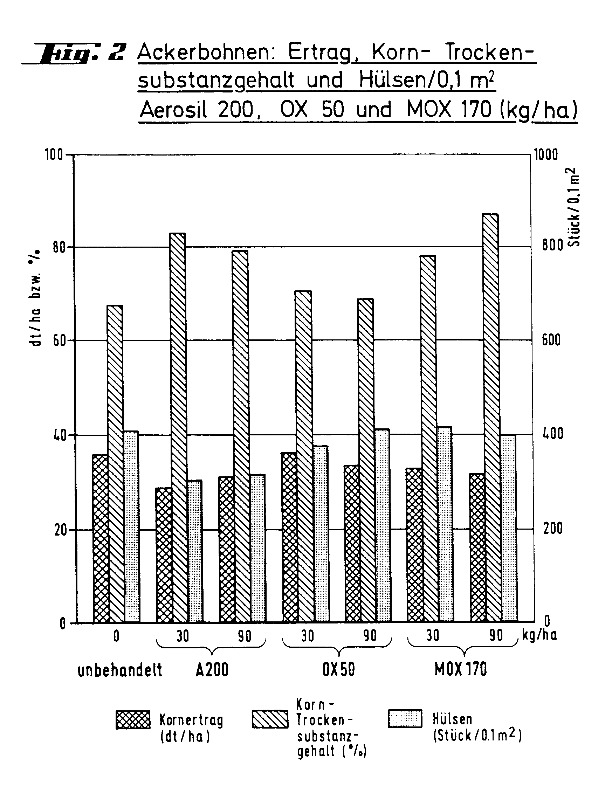

Diese Ergebnisse sind in der Figur 2 graphisch dargestellt.

Die eingesetzten pyrogen hergestellten Kieselsäuren beziehungsweise Kieselsäuredispersionen sind im Handel erhältlich und weisen die folgenden physikalischchemischen Kenndaten auf:

| | | AEROSIL 200 | AEROSIL OX 50 | AEROSIL MOX 170 |
|---|---|---|---|---|
| Oberfläche nach BET | m²/g | 200±25 | 50±15 | 170±30 |
| Mittlere Größe der Primärteilchen | Nanometer | 12 | 40 | 15 |
| Stampfdichte ¹⁾ | g/l | ca. 50 | ca. 130 | ca. 50 |
| Trocknungsverlust ²⁾ (2h bei 105°C) bei Verlassen des Werkes | % | < 1,5 | < 1,5 | < 1,5 |
| Glühverlust ²⁾ ⁷⁾ (2h bei 1000°C) | % | < 1 | < 1 | < 1 |
| pH-Wert ³⁾ (in 4%iger wäßriger Dispersion) | | 3,6-4,3 | 3,8-4,5 | 3,6-4,3 |
| SiO₂ ⁵⁾ | % | > 99,8 | >99,8 | >98,3 |
| Al₂O₃ ⁵⁾ | % | <0,05 | <0,08 | 0,3-1,3 |
| Fe₂O₃ ⁵⁾ | % | <0,003 | <0,01 | <0,01 |
| TiO₂ ⁵⁾ | % | <0,03 | <0,03 | <0,03 |
| HCl ⁵⁾ ¹⁰⁾ | % | <0,025 | <0,01 | <0,025 |
| Siebrückstand ⁴⁾ nach Mocker (45 µm) | % | <0,05 | <0,1 | <0,1 |

| | | | | |
|---|---|---|---|---|
| Technische Daten der AEROSIL-Standardtypen 1) nach DIN 53 194 | | | | |
| 2) nach DIN 55 921 | | | | |
| 3) nach DIN 53 200 | | | | |
| 4) nach DIN 53 580 | | | | |
| 5) bezogen auf die 2 Stunden bei 1000 °C geglühte Substanz | | | | |
| 7) bezogen auf die 2 Stunden bei 105 °C getrocknete Substanz | | | | |
| 10) HCl-Gehalt ist Bestandteil des Glühverlustes | | | | |

| Kieselsäuredispersionen | | | | |
|---|---|---|---|---|
| | | K 315 | K 330 | K 310 |
| AEROSIL-Type | | MOX 170 | OX 50 | 200 |
| SiO₂-Gehalt | g/1000 cm³ | 150 | 300 | 100 |
| Viskosität bei 20 °C | °E | 1,1-1,4 | 1,1-1,4 | 1,0-1,2 |
| spez. Gewicht bei 20 °C | g/cm³ | 1,08 | 1,15 | |

## Patentansprüche

1. Verfahren zur Beschleunigung der Abreife landwirtschaftlicher Nutzpflanzen, dadurch gekennzeichnet, daß man die landwirtschaftlichen Nutzpflanzen mit einer wäßrigen Dispersion einer oder mehrerer hydrophiler, auf pyrogenem Wege hergestellter Kieselsäuren behandelt.

## Claims

1. A process for accelerating the ripening of agriculturally useful plants, characterised in that the agriculturally useful plants are treated with an aqueous dispersion of one or more hydrophilic, pyrogenically produced silicas.

## Revendications

1. Procédé pour accélérer la maturation des plantes utiles en agriculture, caractérisé en ce que l'on traite les plantes utiles en agriculture par une dispersion aqueuse d'un ou plusieurs acides siliciques hydrophiles obtenus par voie pyrogénée.
